Europäisches Patentamt

European Patent Office

Office européen des brevets

(19)

(11) Veröffentlichungsnummer: **0 101 986**
**B1**

(12) # EUROPÄISCHE PATENTSCHRIFT

(45) Veröffentlichungstag der Patentschrift: **20.01.88**

(51) Int. Cl.⁴: **A 22 C 13/02**

(21) Anmeldenummer: **83107734.2**

(22) Anmeldetag: **05.08.83**

(54) Geraffte Schlauchhülle, Rafforgan zu ihrer Herstellung sowie Vorrichtung mit diesem Rafforgan.

(30) Priorität: **14.08.82 DE 3230358**

(43) Veröffentlichungstag der Anmeldung:
**07.03.84 Patentblatt 84/10**

(45) Bekanntmachung des Hinweises auf die Patenterteilung:
**20.01.88 Patentblatt 88/03**

(84) Benannte Vertragsstaaten:
**AT BE CH DE FR GB IT LI LU NL SE**

(56) Entgegenhaltungen:
**FR-A-2 437 295**
**GB-A-1 151 687**
**US-A-3 907 003**

(73) Patentinhaber: **HOECHST AKTIENGESELLSCHAFT**
**Postfach 80 03 20**
**D-6230 Frankfurt am Main 80 (DE)**

(72) Erfinder: **Wolf, Hans**
**Obentrautstrasse 13**
**D-6507 Ingelheim 4 (DE)**
Erfinder: **Lenhart, Richard**
**Dahlemweg 4**
**D-6200 Wiesbaden (DE)**

Courier Press, Leamington Spa, England.

EP 0 101 986 B1

**Beschreibung**

Die Erfindung bezieht sich auf eine geraffte Schlauchhülle von der im Oberbegriff des Anspruchs 1 genannten Art, auf ein Rafforgan zu ihrer Herstellung von der im Oberbegriff des Anspruchs 7 genannten Art und auf eine Vorrichtung von der im Oberbegriff des Anspruchs 9 genannten Art.

Eine geraffte Schlauchhülle der angegebenen Gattung, die man auch als Raupe bezeichnet, ist aus der US—A—3,907,003, ein Rafforgan und eine Vorrichtung mit diesem Rafforgan aus der US—A—4,185,358 bekannt. Diese bekannte Raupe ist sehr dicht gerafft, was zwar für ihre Biegefestigkeit von Vorteil ist, bei ihrer Wässerung vor dem Füllvorgang allerdings sehr nachteilig sein kann. So müssen diese Raupen sehr lange gewässert werden, und es besteht Gefahr, daß sie ungleichmäßig Wasser aufnehmen. Diese Nachteile treten vor allem bei Schlauchhüllen aus regenerierter Cellulose mit Faserverstärkung auf.

Es ist deshalb Aufgabe der Erfindung, eine geraffte Schlauchhülle der eingangs genannten Art dahingehend zu verbessern, daß sie ein besseres Wässerungsverhalten ziegt, d.h. sie soll in weit kürzerer Zeit genügend und auch gleichmäßig viel Wasser aufnehmen können.

Diese Aufgabe wird gelöst durch die in den Ansprüchen 1 bis 6 angegebene Schlauchhülle, das Rafforgan nach Anspruch 7 und die Vorrichtung nach Anspruch 9.

Die Raupe der Erfindung ist schneller füllfertig, läßt sich gleichmäßig wässern und ergibt Würste mit gleichmäßigem Füllkaliber.

Anstelle der einzigen Hauptfalte mit gleichmäßiger spiralförmiger Windung der bekannten Raupe zeigt die geraffte Schlauchhülle zwei Hauptfalten, deren jeweiliger schraubenlinienförmiger Verlauf keine gleichförmige Wendel ist, sondern eine aus einzelnen Abschnitten in Form von Kreissegmenten zusammengesetzte Wendel darstellt. Die Schraubenlinien der beiden Hauptfalten sind innerhalb einer Wendel mehrfach mit kreissegmentförmigen Linien überlagert. Wenn man die geraffte Hülle auseinanderzieht, befindet sich zwischen beiden Hauptfalten ein erster Zwischenraum mit spiralförmigem Verlauf. Der zwischen aufeinanderfolgenden Umdrehungen dieses ersten Zwischenraums vorhandene, zweite Zwischenraum ist gleich groß oder breiter als der erste Zwischenraum und zeigt ebenfalls spiralförmigen Verlauf. In beiden Zwischenräumen befinden sich Nebenfalten.

Im ersten Zwischenraum sind die im folgenden als primäre Nebenfalten bezeichneten Falten nach außen gerichtet und bilden, gleichfalls wie die beiden Hauptfalten, den Außenumfang der gerafften Hülle. Deshalb und auch wegen der eventuellen geringeren Breite des ersten Zwischenraums reichen die zwischen zwei primären Nebenfalten bzw. zwischen einer primären Nebenfalte und Hauptfalte vorhandenen Taschen nicht bis zum Hohlzylinderinnenraum, im Gegensatz zu den Taschen, die sich im zweiten Zwischenraum befinden und deren Boden den Innenumfang der gerafften Hülle bildet. Die primären Nebenfalten erstrecken sich von einer Hauptfalte zur direkt benachbarten Hauptfalte, teilweise kreuzen sie sich mit anderen primären Nebenfalten oder es vereinigen sich zwei primäre Nebenfalten zu einer einzigen Nebenfalte. Sie verlaufen überwiegend in Umfangsrichtung, so daß sie sich in gerafftem Zustand der Schlauchhülle nahezu parallel mit den Hauptfalten erstrekken.

Im zweiten, größeren Zwischenraum zeigt die sekundäre Nebenfaltenstruktur im entrafften Zustand der Raupe zickzackförmigen Verlauf der Falten, wobei sich die Spitzen der Zickzacklinie teilweise bis zu einer Hauptfalte erstrecken, so daß an diesen Stellen der gerafften Schlauchhülle die sekundären Nebenfalten bis zum Außenumfang der Raupe reichen. Der Verlauf der Zickzacklinie der sekundären Nebenfalten, die Länge ihrer einzelnen Abschnitte und die Winkel zwischen zwei Abschnitten der Zickzacklinie sind völlig unregelmäßig.

Es ist erfindungswesentlich, daß das Hüllenmaterial zwischen dem Innenraum der Raupe und den nach außen weisenden Falten nicht übereinander angeordnet ist, d.h. nicht zur Längsachse geneigt ist, sondern sich im wesentlichen senkrecht zur Längsachse erstreckt. Der Winkel zwischen dem Hüllenmaterial und der Längsachse, der in der Fig. 9 der US—A—3,907,003 mit $\alpha$ bezeichnet ist, weicht somit nur geringfügig von 90° ab.

Die Schlauchhülle besteht aus einem flexiblen Material, wie es zur Herstellung geraffter Schlauchhüllen, insbesondere geraffter Wursthüllen üblich ist. Vorzugsweise besteht sie aus regenerierter Cellulose mit Fasereinlage.

Dieses Material zeigt bei der Schlauchhülle mit der erfindungsgemäßen Faltenstruktur besonders gutes Wässerungsverhalten. Die Schlauchhülle kann auf ihrer äußeren und inneren Oberfläche bei Wursthüllen übliche Überzugsschichten aufweisen. Ein Gleitmittel zum erleichterten Raffen kann der Schlauchhülle auf der Außen- oder Innenseite vor oder während dem Raffen zugesetzt werden.

Zweckmäßigerweise wird die geraffte Schlauchhülle wegen ihrer relativ geringen Biegesteifigkeit mit einer äußeren Umhüllung aus einer Folie oder einem Netz (US—A—4,325,413) versehen.

Die Erfindung wird anhand der Fig. 1 bis 6 näher erläutert. Es zeigt

Fig. 1 eine perspektivische Ansicht einer gerafften Schlauchhülle teilweise im entrafften Zustand,

Fig. 2 eine Darstellung des Faltenmusters der völlig entrafften und aufgeschnittenen Schlauchhülle der Fig. 1,

Fig. 3 das Rafforgan im Längsschnitt,

Fig. 4 eine perspektivische Ansicht des Rafforgans, teilweise im aufgeschnittenen Zustand,

Fig. 5 das Rafforgan der Fig. 3 und 4 in Arbeitsposition im Längsschnitt,

Fig. 6 eine Seitenansicht der Vorrichtung mit dem Rafforgan der Fig. 3 bis 5.

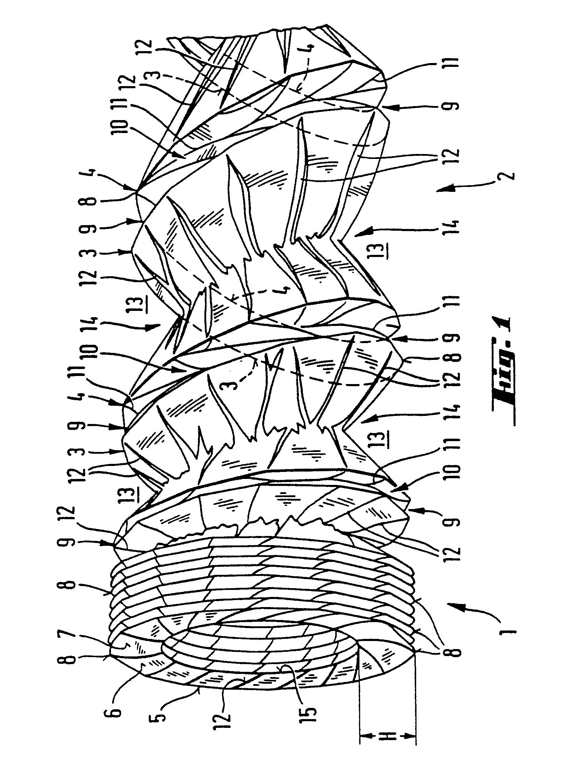

In Fig. 1 zeigt die geraffte Schlauchhülle 1 einen auseinandergezogenen, aber noch nicht vollständig entrafften Teil 2. Die Hauptfalten 3 und 4 zeigen einen schraubenlinienförmigen Verlauf und befinden sich am äußeren Umfang 5 der Schlauchhülle. Mit 6 und 7 sind Kreissegmente einer Hauptfalte bezeichnet, die in einer Ecke 8 aufeinander treffen. Zwischen zwei Hauptfalten 3 und 4 befindet sich ein erster Zwischenraum 9 mit Falttaschen 10 und primären Nebenfalten 11. Die sekundären Nebenfalten 12 befinden sich im zweiten Zwischenraum 13, der eine tiefere Falttasche 14 besitzt, welche mit ihrem Boden im gerafften Zustand der Schlauchhülle den Innenumfang 15 der gerafften Schlauchhülle 1 bildet.

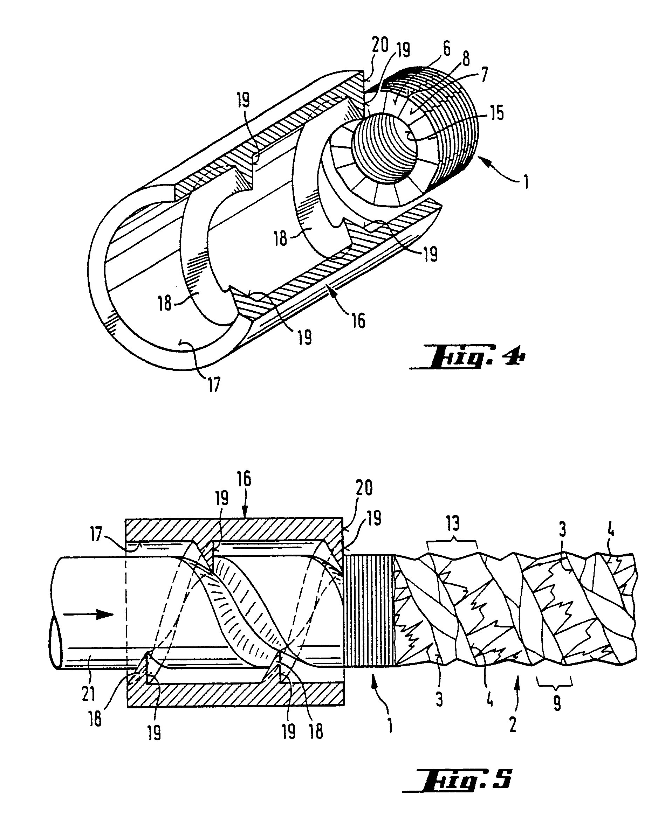

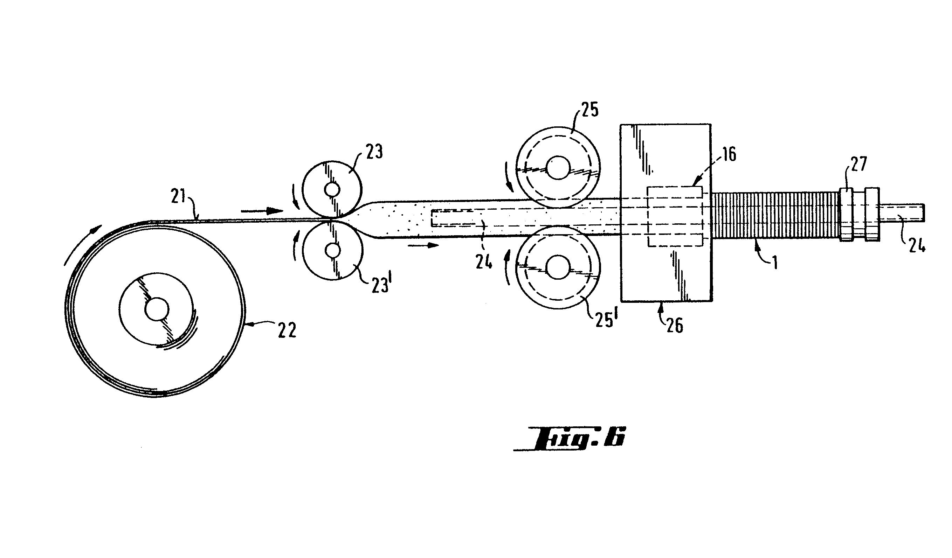

Die Faltenhöhe H der gerafften Schlauchhülle 1 ergibt sich aus der halben Differenz von Raupenaußendurchmesser und Raupeninnendurchmesser. Der Raupeninnendurchmesser ist durch den Außendurchmesser des Raffdorns 24 (Fig. 6), der Raupenaußendurchmesser ist durch das Schlauchkaliber festgelegt.

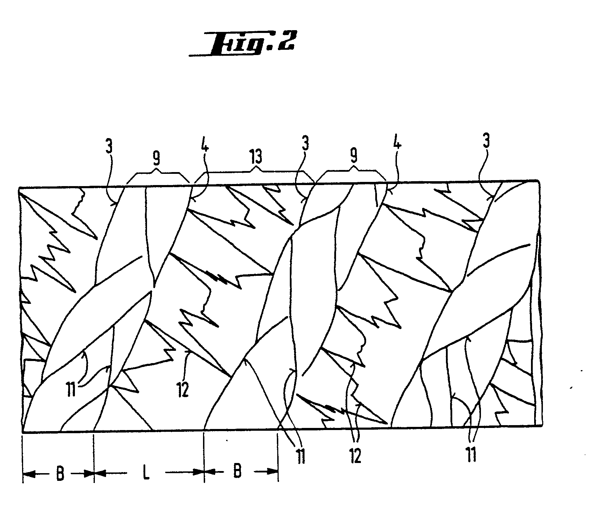

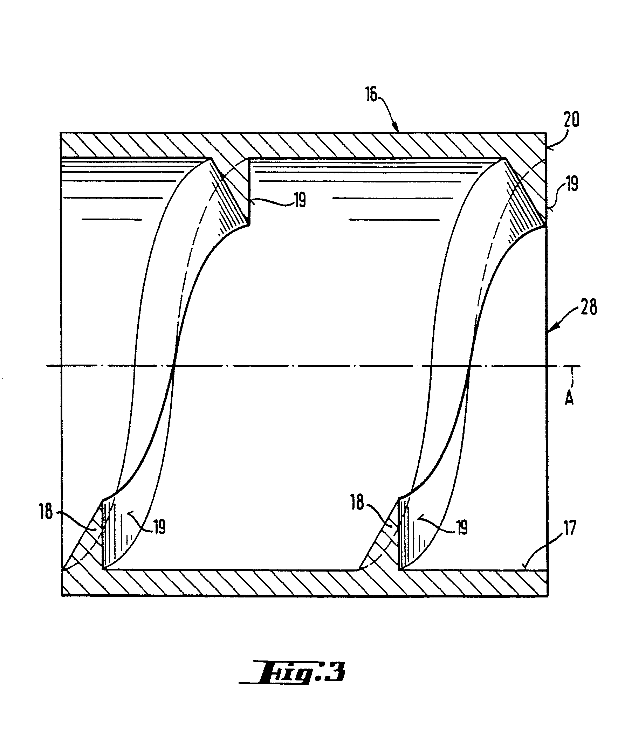

In Fig. 2 ist ein Teil der Schlauchhülle der Fig. 1 im völlig auseinandergezogenen und längsaxial aufgeschnittenen Zustand gezeigt. Die Bezugsziffern haben die gleiche Bedeutung wie in Fig. 1. Mit L ist die Breite des zweiten Zwischenraums 13 (Fig. 1) bezeichnet. L ist etwa das 2,2-bis 2,8-fache der Faltenhöhe H, die wiederum vom Durchmesser des Raffdorns 24 (Fig. 6) und vom Schlauchkaliber abhängig ist. Bei vorgegebenem Raffdorn und Schlauchkaliber ist somit auch L festgelegt. B ist die Breite des ersten Zwischenraums 9. Sie läßt sich einstellen durch Änderung der Drehgeschwindigkeit des hülsenförmigen Ringteils 16 (Fig. 3 bis 5) der Raffeinheit 26 (Fig. 6). Bei vorgegebener Schlauchgeschwindigkeit durch Antriebsorgane wie Rollen 25, 25′ (Fig. 6) wird B mit abnehmender Drehgeschwindigkeit des Ringteils 16 (Fig. 3 bis 5) immer größer. Im optimalen Fall nähert sich B den Werten von L oder ist gleich groß.

In Fig. 3 ist das hülsenförmige Ringteil 16 im Längsschnitt dargestellt. Es besitzt eine zylinderförmige Innenwandung 17 mit einem schraubenförmigen Vorsprung 18. Seine Fläche 19 erstreckt sich senkrecht zur Längsachse A des Rafforgans 16.

An der Öffnung 28 des Rafforgans 16, die sich in Fig. 3 auf der rechten Seite befindet, fluchtet die Fläche 19 mit der gerafften Hülle 1 (Fig. 4) zugewandten Außenfläche 20, d.h. die Fläche 19 bildet an dieser Öffnung 28 mit der Außenfläche 20 eine gemeinsame ebene Fläche.

In Fig. 4 und 5 haben die Bezugsziffern die gleiche Bedeutung wie in den vorhergehenden Figuren.

In Fig. 6 wird eine flachgelegte Schlauchhülle 21 von der Rolle 22 abgerollt und nach Durchlaufen der Quetschwalzen 23, 23′, in aufgeblasenem Zustand gehalten, wobei durch den Dorn 24 in bekannter Weise Luft eingeblasen wird. Die aufgeblähte Schlauchhülle bewegt sich durch zwei weitere angetriebene Rollen 25, 25′, welche ein unerwünschtes Verdrehen der Schlauchhülle ausschalten, und wird mit der schematisch dargestellten Raffeinheit 26 mit dem Ringteil 16 der Fig. 3 bis 5 zu einer gerafften Schlauchhülle 1 gegen das Widerlager 27 dicht zusammengepreßt.

**Patentansprüche**

1. Geraffte Schlauchhülle (1), insbesondere Wursthülle, in Form eines Hohlzylinders mit einer nach außen weisenden schraubenförmigen Hauptfaltenstruktur und einer zwischen den Windungen der Hauptfaltenstruktur und dem Holzylinderinnenraum angeordneten Nebenfaltenstruktur, dadurch gekennzeichnet, daß die Hauptfaltenstruktur aus zwei relativ dicht beieinander liegenden, schraubenlinienförmig verlaufenden, nach außen weisenden Hauptfalten (3, 4) besteht, wobei im entrafften Zustand der Schlauchhülle zwischen den beiden Hauptfalten (3, 4) ein erster Zwischenraum (9) und zwischen zwei aufeinanderfolgenden Umdrehungen der Hauptfaltenstruktur ein zweiter Zwischenraum (13) vorhanden ist und wobei ferner der erste Zwischenraum (9) kleiner oder gleich groß ist im Vergleich zum zweiten Zwischenraum (13), daß der erste Zwischenraum (9) eine Vielzahl von nach außen weisenden, primären Nebenfalten (11) aufweist, wobei die Tiefe der gebildeten Falttaschen (10) geringer ist als die Faltenhöhe (H), und daß im zweiten Zwischenraum (13) sekundäre Nebenfalten (12) vorhanden sind, die im entrafften Zustand der Schlauchhülle die Form einer unregelmäßigen Zickzacklinie zeigen, wobei die Tiefe der durch den zweiten Zwischenraum (13) gebildeten Falttaschen (14) etwa der Faltenhöhe (H) entspricht, und daß die von den nach außen weisenden Hauptfalten (3, 4) und Nebenfalten (11, 12) in Richtung zum Innenumfang (15) sich erstreckenden Flächen der gerafften Schlauchhülle (1) im wesentlichen senkrecht zur Längsachse der gerafften Schlauchhülle (1) stehen.

2. Geraffte Schlauchhülle nach Anspruch 1, dadurch gekennzeichnet, daß die Hauptfalten (3, 4) innerhalb einer Wendel aus kreissegmentförmigen Abschnitten (6, 7) zusammengesetzt sind.

3. Geraffte Schlauchhülle nach Anspruch 1 oder 2, dadurch gekennzeichnet, daß die primären Nebenfalten (11) beide Hauptfalten (3, 4) miteinander verbinden und teilweise miteinander verbunden sind.

4. Geraffte Schlauchhülle nach einem der Ansprüche 1 bis 3, dadurch gekennzeichnet, daß die sekundären Nebenfalten (12) sich vom Hohlzylinderinnerenraum (15) bis zum Außenumfang (5) erstrecken.

5. Geraffte Schlauchhülle nach einem der Ansprüche 1 bis 4, dadurch gekennzeichnet, daß sie aus regenerierter Cellulose mit einer Faserverstärkung besteht.

6. Geraffte Schlauchhülle nach einem der Ansprüche 1 bis 5, dadurch gekennzeichnet, daß sie mit einer äußeren Umhüllung versehen ist.

7. Rafforgan zur Herstellung der gerafften Schlauchhülle nach einem der Ansprüche 1 bis 6, bestehend aus einem hülsenförmigen Ringteil (16), welches eine zylinderförmige Innenwandung (17) aufweist, die an den Öffnungen des Ringteils (16) in Außenflächen (20) übergeht und auf der sich ein schraubenförmig gewundener Vorsprung (18) erstreckt, wobei das Ringteil (16) im Betrieb die zu raffende Hülle umschließt und in Rotation um diese versetzbar ist, dadurch gekennzeichnet, daß der Vorsprung (18) auf einer Seite eine senkrecht zur Längsachse (A) des Ringteils (16) sich erstreckende Fläche (19) aufweist und daß diese Fläche (19) beim Erreichen einer der Öffnungen (28) des Ringteils (16) mit der angrenzenden Außenfläche (20) eine gemeinsame ebene Fläche ausbildet.

8. Verwendung des Rafforgans nach Anspruch 7 in einer Vorrichtung zur Herstellung der gerafften Schlauchhülle nach einem der Ansprüche 1 bis 6, mit der Maßgabe, daß die senkrecht zur Längsachse (A) des Ringteils (16) sich erstreckende Fläche (19) des Vorsprungs (18) der gerafften Schlauchhülle (1) zugewandt ist.

9. Vorrichtung zur Herstellung der gerafften Schlauchhülle nach einem der Ansprüche 1 bis 6, umfassend Mittel (22, 23) zum Bewegen der Schlauchhülle in Richtung ihrer Längsachse, einen stab- oder rohrförmigen Dorn (24), auf dem die Schlauchhülle gerafft und zusammengepreßt wird, eine um den Dorn (24) angeordnete Einrichtung (26) zum Raffen der Schlauchhülle auf dem Dorn (24), die ein hülsenförmiges Ringteil (16) enthält, welches im Betrieb die zu raffende Hülle umschließt und in Rotation um diese versetzbar ist sowie eine zylinderförmige Innenwandung (17) aufweist, auf der sich ein schraubenförmig gewundener Vorsprung (18) erstreckt, und ferner umfassend ein hinter dieser Einrichtung (26) angeordnetes Widerlager (27), welches sich in Längsrichtung gegen die Schlauchhülle während des Raffens anlegt, dadurch gekennzeichnet, daß das Ringteil (16) nach Anspruch 7 eingesetzt ist, wobei die senkrecht zur Längsachse (A) des Ringteile (16) sich erstreckende Fläche (19) des Vorsprungs (18) der gerafften Schlauchhülle zugewandt ist.

**Revendications**

1. Enveloppe en forme de boyau plissée (1), en particulier enveloppe pour saucisses, en forme d'un cylindre creux ayant une structure plissée principale hélicoïdale dirigée vers l'extérieur et une structure plissée accessoire disposée entre les spires de la structure plissée principale et l'espace interne du cylindre creux, caractérisée en ce que la structure plissée principale est constituée de deux plis principaux (3, 4) à tracé hélicoïdal, se trouvant relativement près l'un de l'autre, dirigés vers l'extérieur, un premier espace intermédiaire (9) étant présent entre les deux plis principaux (3, 4) et un second espace intermédiaire (13) étant présent entre deux spires successives de la structure plissée principale, lorsque l'enveloppe en forme de boyau se trouve à l'état déployé, et en outre le premier espace intermédiaire (9) étant de taille inférieure ou égale par rapport au second espace intermédiaire (13), en ce que le premier espace intermédiaire (9) présente plusieurs plis accessoires primaires (11) dirigés vers l'extérieur, la profondeur des poches de pli formées (10) étant inférieure à la hauteur de pli (H), et en ce que dans le second espace intermédiaire (13) sont présents des plis accessoires secondaires (12) qui présentent la forme d'une ligne en zigzag irrégulière lorsque l'enveloppe en forme de boyau se trouve à l'état déployé, la profondeur des poches de pli (14) formées par le second espace intermédiaire (13) correspondant approximativement à la hauteur de pli (H), et en ce que les surfaces de l'enveloppe en forme de boyau plissée (1) qui s'étendent des plis principaux (3, 4) et plis accessoires (11, 12), dirigés vers l'extérieur, en direction du contour interne (15), sont essentiellement perpendiculaires à l'axe longitudinal de l'enveloppe en forme de boyau plissée (1).

2. Enveloppe en forme de boyau plissée selon la revendication 1, caractérisée en ce que les plis principaux (3, 4) sont à l'intérieur d'une hélice composés de sections en forme de segments de cercle (6, 7).

3. Enveloppe en forme de boyau plissée selon la revendication 1 ou 2, caractérisée en ce que les plis accessoires primaires (11) sont reliés aux deux plis principaux (3, 4) et en partie reliés entre eux.

4. Enveloppe en forme de boyau plissée selon l'une des revendications 1 à 3, caractérisée en ce que les plis accessoires secondaires (12) s'étendent de l'espace interne du cylindre creux (15) au contour externe (5).

5. Enveloppe en forme de boyau plissée selon l'une des revendications 1 à 4, caractérisé en ce qu'elle est constituée de cellulose régénérée comportant un renforcement de fibres.

6. Enveloppe en forme de boyau plissée selon l'une des revendications 1 à 5, caractérisée en ce qu'elle est munie d'une enveloppe externe.

7. Organe de plissage pour la fabrication de l'enveloppe en forme de boyau plissée selon l'une des revendications 1 à 6, constitué d'un élément annulaire (16) en forme de manchon, lequel comporte une paroi interne cylindrique (17) qui devient surfaces externes (20) au niveau des ouvertures de l'élément annulaire (16) et sur laquelle s'étend und saillie hélicoïdale (18), l'élément annulaire (16) entourant lors du fonctionnement l'enveloppe à plisser et pouvant être animé d'un mouvement de rotation autour de celle-ci, caractérisé en ce que la saillie (18) présente d'un côté une surface (19) s'étendant perpendiculairement à l'axe longitudinal (A) de l'élément annulaire (16) et en ce que cette surface (19) forme, lorsqu'elle arrive à l'une des ouvertures (28) de l'élément annulaire (16), une surface plane commune avec la surface externe adjacente (20).

8. Utilisation de l'organe de plissage selon la revendication 7 dans un dispositif pour la fabrication de l'enveloppe en forme de boyau plissée selon l'une des revendications 1 à 6, étant entendu que la surface (19) de la saillie (18) s'étendant perpendiculairement à l'axe longitudinal (A) de l'élément annulaire (16) fait face à l'enveloppe en forme de boyau plissée (1).

9. Dispositif pour la fabrication de l'enveloppe en forme de boyau plissée selon l'une des revendications 1 à 6, comprenant des moyens (22, 23) pour le déplacement de l'enveloppe en forme de boyau dans la direction de son axe longitudinal, un mandrin en forme de tige ou de tube (24) sur lequel l'enveloppe en forme de boyau est plissée et repliée sur elle-même, un dispositif (26) placé autour du mandrin (24) pour le plissage de l'enveloppe en forme de boyau sur le mandrin (24), lequel dispositif contient un élément annulaire (16) en forme de manchon qui entoure lors du fonctionnement l'enveloppe à plisser et peut être animé d'un mouvement de rotation autour de celle-ci, et qui présente une paroi interne cylindrique (17) sur laquelle s'étend une saillie hélicoïdale (18) et comprenant en outre une butée (27) placée en arrière de ce dispositif (26), laquelle s'applique dans la direction longitudinale contre l'enveloppe en en forme de boyau pendant le plissage, caractérisé en ce que l'élément annulaire (16) est disposé selon la revendication 7, la surface (19) de la saillie (18) qui s'étend perpendiculairement à l'axe longitudinal (A) de l'élément annulaire (16) faisant face à l'enveloppe en forme de boyau plissée.

## Claims

1. A shirred tubular casing (1), particularly a sausage casing, which has the form of a hollow cylinder with an outwardly pointing helical main fold structure and an accessory fold structure and the interior space of the hollow cylinder, wherein the main fold structure comprises two helically extending, outwardly pointing main folds (3, 4) which are relatively close to each other, with a first interspace (9) being present between the two main folds (3, 4) and a second interspace (13) being present between two successive turns of the main fold structure, when the tubular casing is in the deshirred state, the first interspace (9) being smaller or equal in size, compared with the second interspace (13), wherein the first interspace (9) exhibits a plurality of outwardly pointing primary accessory folds (11) with the depth of the fold pockets (10) formed being less than the height of fold (H), wherein secondary accessory folds (12) are present in the second interspace (13), which, in the deshirred state of the tubular casing, show the form of an irregular zigzag line, with the depth of the fold pockets (14) formed by the second interspace (13) approximately corresponding to the height of fold (H) and wherein the surfaces of the shirred tubular casing (1) which extend from the outwardly pointing main folds (3, 4) and the accessory folds (11, 12) in the direction of the inner circumference (15) are substantially at right angles to the longitudinal axis of the shirred tubular casing (1).

2. A shirred tubular casing as claimed in claim 1, wherein the main folds (3, 4) within one helix are composed of sections (6, 7) having the form of circular segments.

3. A shirred tubular casing as claimed in claim 1 or claim 2, wherein the primary accessory folds (11) connect to two main folds (3, 4) with one another and are partly interconnected.

4. A shirred tubular casing as claimed in any of claims 1 to 3, wherein the secondary accessory folds (12) extend from the internal space of the hollow cylinder (15) up to the outer circumference (5).

5. A shirred tubular casing as claimed in any of claims 1 to 4, which comprises regenerated cellulose having a fiber reinforcement.

6. A shirred tubular casing as claimed in any of claims 1 to 5, which is provided with an outer jacket.

7. A shirring member for manufacturing the shirred tubular casing as claimed in any of claims 1 to 6, comprising a sleeve-shaped annular element (16) which has a cylindrical inner wall (17) which, at the openings of the annular element (16), merges into outer surfaces (20) and on which a helically wound projection (18) extends, the annular element (16) enclosing the casing to be shirred and being rotatable about the casing, when it is in operation, wherein the projection (18) has on one side a surface (19) extending at right angles to the longitudinal axis (A) of the annular element (16) and wherein this surface (19), upon reaching one of the openings (28) of the annular element (16), forms a common plane surface with the adjoining outer surface (20).

8. Use of the shirring member as claimed in claim 7 in an apparatus for manufacturing the shirred tubular casing as claimed in any of claims 1 to 6, on the condition that the surface (19) of the projection (18), which extends at right angles to the longitudinal axis (A) of the annular element (16) faces the shirred tubular casing (1).

9. An apparatus for manufacturing the shirred tubular casing as claimed in any of claims 1 to 6, comprising means (22 and 23) for moving the tubular casing in the direction of its longitudinal axis, a mandrel (24) in the form of a rod or tube, on which the tubular casing is shirred and compressed, a unit (26) for shirring the tubular casing on the mandrel (24), which is arranged around the mandrel (24) and includes a sleeve-shaped annular element (16) which encloses the casing to be shirred and is rotatable about the casing, when it is in operation, and which has a cylindrical inner wall (17), on which a helically wound projection (18) extends, and further comprising an abutment (27) which is arranged behind this unit (26) and contacts the tubular casing in the longitudinal direction during shirring, wherein the annular element (16) is disposed in accordance with claim 7, the surface (19) of the projection (18), which extends at right angles to the longitudinal axis (A) of the annular element (16) facing the shirred tubular casing.

Fig. 1

# Fig.2

Fig.3

0 101 986

*Fig. 4*

*Fig. 5*

4

Fig. 6